Europäisches Patentamt

European Patent Office

Office européen des brevets

(19)

(11) Veröffentlichungsnummer: **0 422 385 A1**

## (12) EUROPÄISCHE PATENTANMELDUNG

(21) Anmeldenummer: **90116970.6**

(22) Anmeldetag: **04.09.90**

(51) Int. Cl.5: **G01J 5/24**

(30) Priorität: **10.10.89 DE 3933823**

(43) Veröffentlichungstag der Anmeldung:
**17.04.91 Patentblatt 91/16**

(84) Benannte Vertragsstaaten:
**DE FR GB IT NL**

(71) Anmelder: **STEINHEIL OPTRONIK GMBH**
**Osterfeldstrasse 82**
**W-8045 Ismaning/München(DE)**

(72) Erfinder: **Krause, Gerhard**
**Wachtelweg 26e**
**W-8200 Rosenheim/Egarten(DE)**

(74) Vertreter: **Pätzold, Herbert, Dr.**
**Steubstrasse 10**
**W-8032 Gräfelfing-München(DE)**

(54) **Optoelektronische Schaltungsanordnung.**

(57) Eine optoelektronische Schaltungsanordnung, beispielsweise für Wärmebildgeräte, enthält eine Vielzahl von unabhängigen Fotodetektorelementen (1), deren Signale durch Multiplexer (3) zusammengefaßt werden. Der Multiplexerausgang (4) liegt an dem gemeinsamen Eingang eines geschalteten Integrators (5), der integrierte Signale an eine Ausgangsschalteinrichtung legt, wobei sichergestellt ist, daß zu keinem Zeitpunkt eine Verbindung zwischen dem Multiplexer (3) und dem Ausgang der Ausgangsschalteinrichtung besteht. Hierzu weist der Integrator wenigstens einen Kanal (5.1, 5.2, 5.3) mit drei elektronischen Schaltgliedern (a, b, c) auf, die in zyklischer Aufeinanderfolge die Operationen "Integrieren", "Integral zum Ausgang geben", "Integral löschen" durchführen.

Fig. 1

## OPTOELEKTRONISCHE SCHALTUNGSANORDNUNG

Die Erfindung betrifft eine elektronische Schaltungsanordnung gemäß dem Oberbegriff des Anspruches 1.

Es sind bereits Schaltungsanordnungen der eingangs genannten Art vorgeschlagen worden, bei denen die Signale der Fotodetektorelemente durch Multiplexer zusammengefaßt werden, deren Ausgang verstärkt wird. Nachteilig ist dabei, daß die Verstärker durch Störspitzen (Spikes) übersteuert werden.

Aufgabe der Erfindung ist es eine Schaltungsanordnung der eingangs genannten Art anzugeben, bei der eine Übersteuerung der Verstärker vermieden wird, also Störspitzen im wesentlichen vermieden werden, wie sie vor allem von elektronischen Schaltern herrühren.

Der Erfindung liegt der Gedanke zugrunde, die Spike-Fehler in Offsetspannungen umzuwandeln, die leichter beherrschbar sind, wie es in der älteren deutschen Patentanmeldung P 38 27 465.5 vom 12.08.1988 bzw. in der entsprechenden prioritätsgleichen europäischen Patentanmeldung 89 114 285.3 vom 2. August 1989 und der prioritätsgleichen US-Patentanmeldung vom 4. August 1989 offenbart ist.

Unter Zugrundelegung dieses Gedankens wird die vorstehende Aufgabe mit den kennzeichnenden Merkmalen des Anspruches 1 gelöst. Vorteilhafte Ausführungen der Erfindung ergeben sich aus den Merkmalen der Unteransprüche und der nachfolgenden Beschreibung.

In der zugehörigen Zeichnung zeigt:

Figur 1 eine prinzipielle Schaltskizze gemäß einem Ausführungsbeispiel,

Figur 2 eine Schaltung für einen Kanal des in Fig. 1 verwendeten Integrators und

Figur 3 eine Schaltung mit zwei Integratoren.

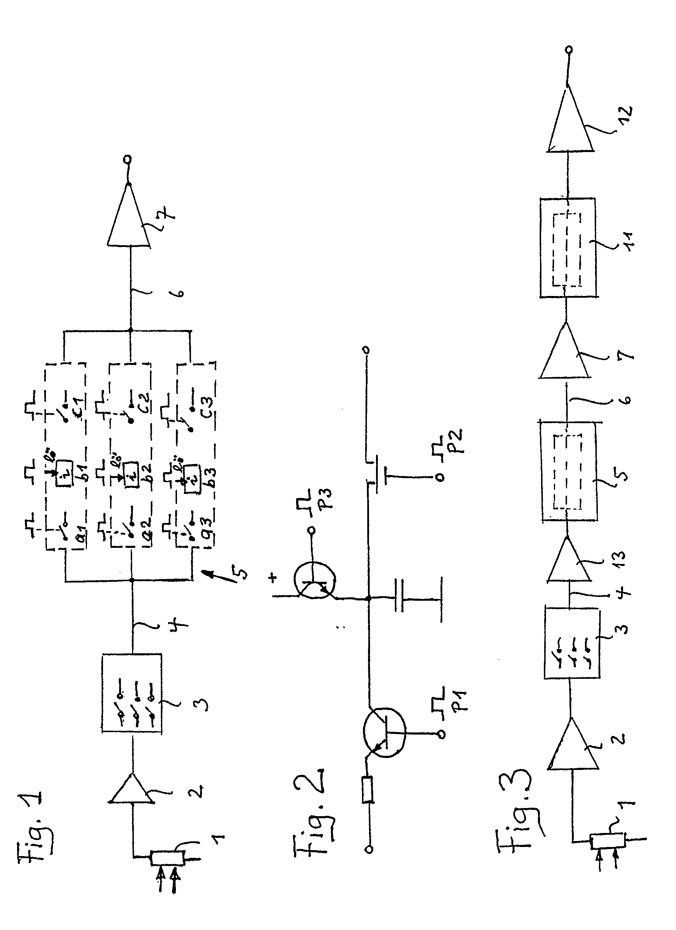

In Fig. 1 ist der Fotodetektor, der aus einer Vielzahl von einzelnen Detektorelementen, beispielsweise 288, besteht, mit 1 bezeichnet. Die Signale der Detektorelemente werden durch eine entsprechende Anzahl von Vorverstärkern 2 verstärkt. Die hierdurch verstärkten Signale der Detektorelemente 1 gelangen zu einem Multiplexer 3, der im Beispielsfalle einen einkanaligen Ausgang 4 aufweist, der an den gemeinsamen Eingang eines schaltbaren Integrators 5 gelegt ist. Der gemeinsame Ausgang 6 dieses Integrators 5 ist hier an einen Nachverstärker 7 gelegt.

Der erfindungsgemäße schaltbare Integrator besitzt im Beispielsfalle drei Kanäle, die ein- und ausgangsseitig miteinander verbunden sind. In jedem Kanal sind mehrere elektronische Schalter vorhanden, die der Reihe nach die Operationen "Integrieren", "Integral zum Ausgang geben" und "Integral löschen" durchführen. Diese Schalter sind im Kanal 5.1 mit $a_1$, $b_1$ und $c_1$, im Kanal 5.2 mit $a_2$, $b_2$ und $c_2$ und im Kanal 5.3 mit $a_3$, $b_3$ und $c_3$ bezeichnet. Die Operationen werden in zyklischer Aufeinanderfolge durchgeführt. Dabei sind die Operationen in den einzelnen Kanälen zyklisch zueinander verschoben.

Hierbei ist sichergestellt, daß zu keinem Zeitpunkt eine Verbindung zwischen dem Multiplexer 3 und den Ausgängen der Ausgangsschalter $c_1$, $c_2$ und $c_3$ besteht.

Beträgt die Abtastzeit eines einzelnen Detektors die Zeitspanne t so wird jeweils in einem Kanal während der Zeit t integriert, sodann wird für die Dauer t das Signal zum Ausgang durchgeschaltet und schließlich wird für die Dauer t das integrierte Signal gelöscht. Die aufeinanderfolgenden Schaltimpulse P1, P2, P3 sind den Elementen $a_1$, $b_1$, $c_1$ im Kanal 5.1 wie folgt zugeordnet:

$a_1$(P1), $b_1$(P3), $c_1$(P2)

Entsprechend sind die Schaltimpulse P1, P2, P3 den Elementen in den Kanälen 5.2 und 5.3 wie folgt zugeordnet:

$a_2$(P2), $b_2$(P1), $c_2$(P3) und

$a_3$(P3), $b_3$(P2), $c_3$(P1).

Hieraus folgt, daß die Operationen in den einzelnen Kanälen zyklisch zueinander verschoben sind.

Die Elemente eines Kanals des erfindungsgemäßen Integrators und ihre Verschaltung untereinander sind für ein Ausführungsbeispiel in Fig. 2 mehr im einzelnen dargestellt, so daß hinsichtlich der Verschaltung auf Fig. 2 besonders verwiesen wird.

Der elektronische Eingangsschalter 8 bildet mit dem Kondensator 9 das Integrationsglied. Der elektronische Ausgangsschalter ist mit 10 und das Löschglied ist mit 11 bezeichnet. Der Eingangsschalter 8 und das Löschglied 11 können im Beispielsfalle bipolare Transistoren sein. Der Ausgangsschalter 10 ist ein Feldeffekttransistor mit sehr kleiner Kapazität. Der Eingangsschalter 8 wirkt dabei als Stromquelle für das Integrationsglied.

Für das Integrationsglied ist ein bipolarer Transistor gewählt, da die empfangenen Spitzenströme relativ hoch sein können. Die Löschsignale des Löschgliedes 11 können sehr kurz sein. Beim Integrieren werden die Flächen der Spike-Fehler mitintegriert, so daß das zum Ausgangsschalter 10 durchgeschaltete Integral keine Spikes mehr enthält. Der Fehler des Integrals wirkt wie eine Offsetspannung (ältere deutsche Patentanmeldung P 38 27 465.5 vom 12.08.1988), die wesentlich leichter zu beherrschen ist, als die hohen Spike-Fehler, wie sie z.B. in Multiplexern entstehen. In Fig. 2 sind die drei Schaltimpulse P1, P2, P3 eingezeichnet.

Die Erfindung ist nicht auf einen dreikanaligen Integrator beschränkt. Die Wirkung wie mit einem dreikanaligen Integrator ist auch mit einem zweikanaligen und im Extremfalle auch mit einem einkanaligen Integrator erzielbar. Bei "n"-Kanälen für $n = 1, 2, 3 \ldots$ ist die Gesamtzeit, in der alle Einzeloperationen in einem Kanal durchgeführt werden n • t, wenn t die Abtasttaktzeit eines Detektors ist.

Figur 3 unterscheidet sich von Fig. 1 dadurch, daß dem Verstärker 7 ein weiterer erfindungsgemäßer Integrator 11 entsprechend dem Integrator 5 folgt, dessen Ausgang einem weiteren Verstärker 12 aufgegeben ist. Außerdem ist dem Integrator ein Verstärker 13 vorgeschaltet.

Die Integratoren 5 und 11 wirken nicht nur zur Unterdrückung von Spike-Fehlern, sondern auch als Tiefpaßfilter. Dabei kommt die Tiefpaßfilterwirkung beim zweiten Integrator 11 besonders zur Geltung. Sowohl in Fig. 1 als auch in Fig. 3 kann der Vorverstärker 2 auch entfallen, sofern es sich z.B. um normale Bildgeräte handelt. Vor allem bei Wärmebildgeräte sind die Verstärker 2 zweckmäßig.

## Ansprüche

1. Optoelektronische Schaltungsanordnung, beispielsweise für Wärmebildgeräte, mit einer Vielzahl von unabhängigen Fotodetektorelementen, deren Signale durch Multiplexer zusammengefaßt werden, **dadurch gekennzeichnet,** daß der Multiplexerausgang (4) an den gemeinsamen Eingang eines geschalteten Integrators (5) angeschlossen ist, der das integrierte Signal an eine elektronische Ausgangsschalteinrichtung legt, wobei sichergestellt ist, daß zu keinem Zeitpunkt eine Verbindung zwischen dem Multiplexer und dem Ausgang des Ausgangsschalters besteht.

2. Schaltungsanordnung nach Anspruch 1, dadurch gekennzeichnet, daß der Integrator (5) mit einem gemeinsamen Eingang und einem gemeinsamen Ausgang wenigstens einen Kanal (5.1; 5.2; 5.3) mit mehreren elektronischen Schaltgliedern (a, b, c) aufweist, die in zyklischer Aufeinanderfolge die Operationen "Integrieren", "Integral zum Ausgang geben" und "Integral löschen" durchführen.

3. Schaltungsanordnung nach Anspruch 2, dadurch gekennzeichnet, daß der Integrator (5) mehrere Kanäle (5.1, 5.2 und 5.3) mit jeweils mehreren elektronischen Schaltern (a, b, c) aufweist, wobei die Operationen in den einzelnen Kanälen zyklisch zueinander verschoben sind.

4. Schaltungsanordnung nach einem der Ansprüche 1 bis 3, bei der die Abtasttaktzeit eines einzelnen Detektors (1) durch die Zeit (t) bestimmt ist, dadurch gekennzeichnet, daß bei n Kanälen für $n = 1, 2, 3 \ldots$ die Gesamtzeit, in der alle Einzeloperationen in einem Kanal durchgeführt werden, n • t ist.

5. Schaltungsanordnung nach Anspruch 4, dadurch gekennzeichnet, daß der Integrator (5) drei Kanäle ($K_1$, $K_2$ $K_3$) aufweist und daß jeweils in einem Kanal für die Dauer (t) integriert, anschließend für die Dauer (t) das Signal zum Ausgang durchgeschaltet und anschließend für die Dauer (t) das integrierte Signal gelöscht wird.

6. Schaltungsanordnung nach einem der vorstehenden Ansprüche, dadurch gekennzeichnet, daß der Integrator (5) zwischen einem Vor- und einem Nachverstärker (13, 7) geschaltet ist.

7. Schaltungsanordnung nach einem der vorstehenden Ansprüche, dadurch gekennzeichnet, daß mehrere Integratoren (5, 11) hintereinander geschaltet sind, die durch Verstärker (13, 7) voneinander getrennt sind.

8. Schaltungsanordnung nach Anspruch 7, dadurch gekennzeichnet, daß mindestens zwei Integratoren (5, 11) vorhanden sind und daß der zweite Integrator (11) zusätzlich zur Störspitzenunterdrückung zugleich Tiefpaßfilter ist.

9. Schaltungsanordnung nach einem der vorstehenden Ansprüche, daß in jedem Kanal (K1, K2, K3) des Integrators (5) ein aus einer Stromquelle (8) und einem Speicher (9) gebildetes Integrationselement, ferner ein elektronischer Ausgangsschalter (10) und ein elektronisches Löschelement angeordnet sind.

10. Schaltungsanordnung nach Anspruch 9, dadurch gekennzeichnet, daß die Stromquelle (8) und das Löschelement (11) jeweils ein bipolarer Transistor und der Ausgangsschalter (10) ein Feldeffekttransistor sind.

Fig. 1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 4 580 051 (TEW)   * Spalte 3, Zeile 3 - Spalte 4, Zeile 25; Fig. 4,5 *  -- | 1-4,6-8 | G 01 J 5/24 |
| A | US - A - 4 705 946 (CARGILLE)   * Spalte 3, Zeile 48 - Spalte 5, Zeile 20; Fig. 1 *  -- | 1 | |
| A | US - A - 4 868 390 (KELLER et al.)  ---- | | |
| | | | RECHERCHIERTE SACHGEBIETE (Int Cl⁵) |
| | | | G 01 J 5/00 H 01 L 31/00 H 04 N 5/00 |

Der vorliegende Recherchenbericht wurde für alle Patentansprüche erstellt

| Recherchenort | Abschlußdatum der Recherche | Prüfer |
|---|---|---|
| WIEN | 29-11-1990 | BAUER |